# EUROPEAN PATENT SPECIFICATION

(11) **EP 0 653 864 B1**
(45) Date of publication and mention of the grant of the patent: **28.05.2003**
(21) Application number: 94307333.8
(22) Date of filing: 06.10.1994
(51) Int. Cl.: H04L 12/413, H04B 10/10

(54) **Predictive collision avoidance method and apparatus for wireless communications**
Verfahren und Vorrichtung zur prädiktiven Kollisions-Vermeidung für drahtlose Kommunikation
Procédé et dispositif prédictifs d'évitement de collisions pour communication sans fils

(30) Priority: 15.11.1993 CA 2103135
(43) Date of publication of application: 17.05.1995
(73) Proprietor: International Business Machines Corporation, Armonk, N.Y. 10504 (US)
(72) Inventor: Hartley, Lee F., Toronto, Ontario M6G 2J8 (CA)
(74) Representative: Williams, Julian David

(56) References cited:
- US-A- 4 661 902
- US-A- 5 164 942

## Description

The present invention relates to a method and apparatus for increasing throughput on a wireless local area network (LAN) by reducing the likelihood of collision between simultaneous transmissions from different stations on the network.

In the computing industry local area networks for the transfer of information or data between a plurality of data processing units are quite common. A typical local area network comprises a number of devices which I will call stations which are interconnected by a cable. The stations can include computers, printers and other devices. With the advent of new types of computers such as the laptops, notebooks and personal digital assistants (PDA) a need has developed for the implementation of a system that is more flexible than a cable connected local area network. Accordingly, Radio Frequency (RF) and infrared (IR) communication systems have been developed to permit portable and other data processing devices to communicate with each other. As will be recognized a local area network formed by a variety of devices coupled by infrared or RF may be extremely flexible in structure in that a number of stations may enter or leave the system without notice. New stations may connect to the LAN simply by being within range of the other stations. In these types of wireless local area networks no base controller is required. The communications are typically peer-to-peer. Accordingly, it is more than likely that two or more stations will try to initiate communications simultaneously with each other with the resulting collision of transmissions and garbling of any data within them. This results from the fact that only a single medium is used for the transmission in the case of RF only a single band in the case of infrared a single wavelength likewise.

Accordingly, it is desirable for some form of collision avoidance apparatus or methods to be applied to reduce the likelihood of collisions between the transmissions of different stations. In the case of the wired local are network transmitting stations may be equipped with circuitry to detect whether a collision has occurred. In the case of a wireless system it is currently impossible for stations transmitting to detect whether a collision has occurred and therefor it is important that a method of avoiding a collision be instituted to reduce the likelihood of collisions and therefor maximize the throughput of any communications medium and network used.

U.S. Patent 4,661,902 issued April 28, 1987 discloses a wired local area network with carrier sense collision avoidance. This reference discloses the use of collision avoidance techniques on the first packet in a three packet protocol.

U.S. Patent 4,979,168 issued December 18, 1990 discloses a dynamic sensing point CSMA packet switching controller in which an event of a channel being sensed busy and a new sensing point is scheduled at random in a dynamically determined time interval.

U.S. Patent 5.040,175 issued August 13, 1991 discloses a wireless information transmission system in which a sending transceiver send information over a transmission channel and verifies whether the transmission was sent successfully by preparing the transmission with a copy of the transmission sent back by the receiving transmitter.

U.S. Patent 5,164,942 issued November 17, 1992 discloses an antenna control system for a wireless local area network station using a CMSA/CD LAN controller and emulating a collision to force the controller to execute its collision backoff algorithm which defers the transmission of a data frame for a random "backoff" time period following the end of the emulated collision.

In accordance with the present invention, there is now provided a method of reducing collision of message packets sent by a station in a wireless communication network used by a least two stations for communication over a medium, the method comprising: permitting access to the medium by each station requiring use of the medium immediately if the medium has been inactive longer than one predetermined delay amount of time; and imposing a length of delay in permitting access to the medium by each of the stations if the medium is in use.

Viewing the present invention from another aspect, there is now provided apparatus for controlling communication in a wireless communication station to reduce the chance of collision of message packets sent by the station with messages sent by other stations using a common communication medium, the apparatus comprising: control means responsive to a request to transmit at the station, the control means at the station comprising; means for immediately transmitting a message on the medium if the medium has been inactive for longer than a predetermined delay amount of time, and means for imposing a delay in transmission of messages if the medium is in use.

In a preferred embodiment of the present invention there is provided a collision avoidance method for use in peer-to-peer communications over a communication medium using CSMA/CA protocol. In a particularly preferred embodiment of the present invention there is provided a simple effective circuit for reducing collisions between transmitting stations and increasing the throughput of the communications medium.

In an especially preferred embodiment of the present invention there is provided a method for avoiding or reducing collisions in a communication system by permitting access to the communication system medium by each station requiring use of the medium immediately if the medium has been inactive longer than one predetermined delay amount of time and imposing a length of delay in permitting access to the medium by each of the stations if the medium is in use.

In a preferred embodiment of the present invention there is provided apparatus for controlling communication in a wireless medium used by at least two stations to reduce the chance of collision of message packets sent by stations. It includes a controller responsive to a transmit command at the station the controller at a station comprising: means for quickly transmitting a message on the medium if the medium has been inactive for longer than a predetermined delay amount of time; and means for imposing a delay in transmission of messages if the medium is in use.

Preferred embodiments of the present invention will now be described with reference to the accompanying drawings, in which:
Figure 1 is a block diagram of an embodiment of the apparatus of the present invention;
Figure 2 is the detailed circuitry of one embodiment of the present invention;
Figure 3 is a flow diagram illustrating the operation of a station using CSMA protocol;
Figure 4 is a flow diagram illustrating the collision avoidance process of an embodiment of the present invention;
Figure 5 illustrates typically activity of a network using an embodiment of the present invention; and
Figure 6 is a block diagram of an infrared communication adapter using an embodiment of this invention.

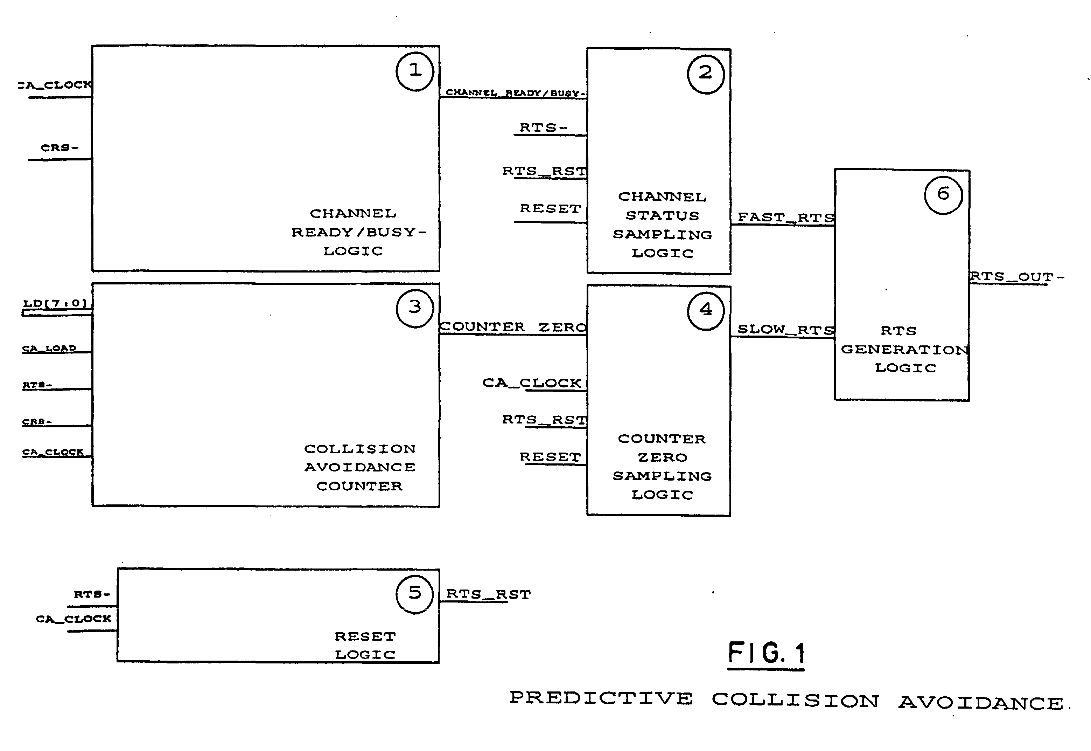

Referring to figure 1 which depicts a blocked diagram of one embodiment of the apparatus of the invention it can be seen that apparatus according to the invention may be comprised of the following; a number of logic units and a collision avoidance counter. In the embodiment herein channel ready busy logic 1 is responsive to a carrier sense signal CRS- and a CA_CLOCK to generate a CHANNEL READY/BUSY- signal to the channel status sampling logic 2. The channel status sampling logic is responsive to the CHANNEL READY/BUSY- signal and the request to send (RTS-) signal. The RTS- signal is generated by a CSMA controller used in the station. The output from the channel status sampling logic (FAST_RTS) is normally 0 and changes to 1 when a request to send (RTS-) is received while the channel is free, ie. the CHANNEL READY/BUSY- signal is high when the RTS- is received. The output of the channel status sampling logic (FAST_RTS) is an input to the RTS Generation Logic. When set to 1, the FAST_RTS signal enables transmission by generating a request to send output (RTS_OUT-) to the optical modem being used by the station. When FAST_RTS is set to a 1, the RTS_OUT- signal is asserted (0) regardless of the state of the second input (SLOW_RTS) to the RTS Generation Logic.

The collision avoidance counter 3 governs the operation of the collision avoidance circuitry when the RTS- signal is active and the FAST_RTS signal is inactive (0). Counter zero sampling logic 4 responds to the Counter_zero signal and the CA_CLOCK. When the counter_zero signal is active (1) the SLOW_RTS signal will be set to 1 on the next CA_CLOCK edge. When set to 1, the SLOW_RTS signal enables transmission by generating a request to send output (RTS_OUT-) to the optical modem being used by the station.

Reset logic 5 generates a high pulse on the RTS_RESET signal in response to rising edge of the RTS- signal. The RTS_RESET signal resets the channel status sampling logic, and the Counter Zero Sampling Logic thus forcing the FAST_RTS and SLOW_RTS signals to 0. This terminates the station's transmission by forcing the RTS_OUT- signal to 1 (inactive).

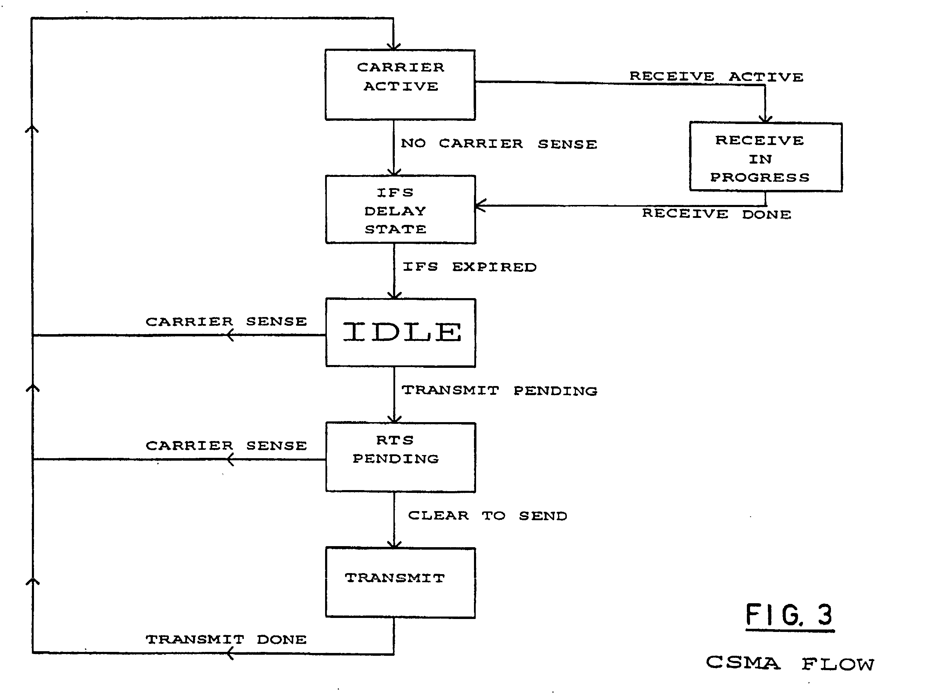

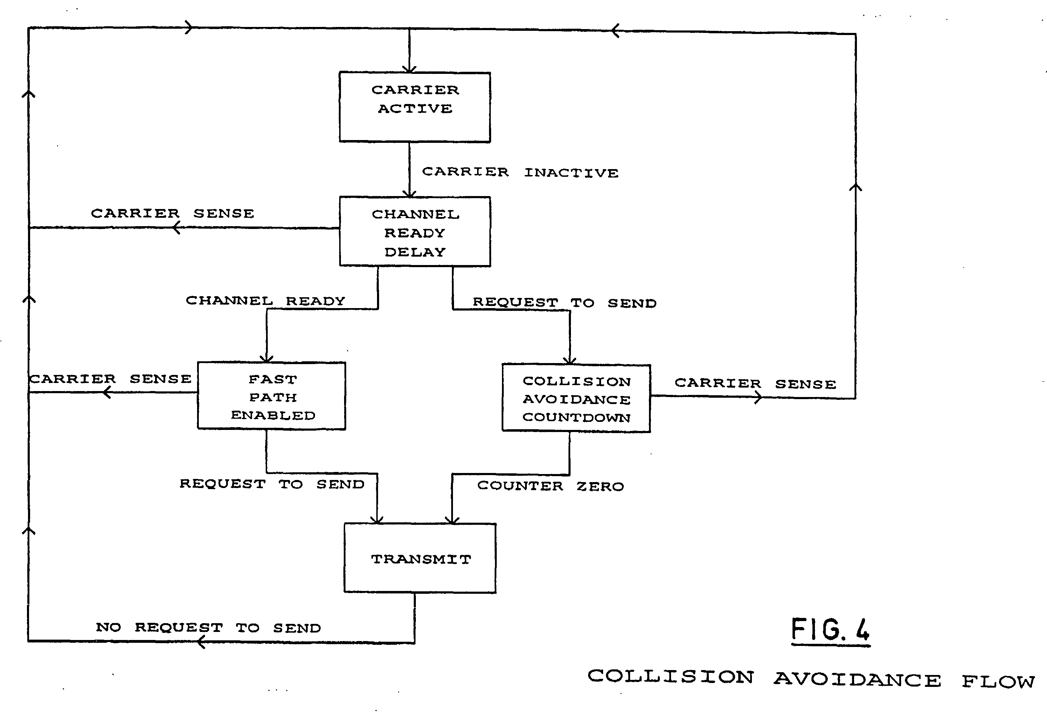

Having described the general embodiment of the invention operation, the CSMA Flow Diagram, Figure 3, and the Collision Avoidance Flow Diagram, Figure 4, will be reviewed.

Referring to the CSMA FLOW DIAGRAM, Figure 3, and beginning in the IDLE state, the CSMA flow will remain in the IDLE state in the absence of CARRIER_SENSE, the CSMA flow enters the CARRIER_ACTIVE state where it will wait for NO_CARRIER_SENSE or the detection of RECEIVE_ACTIVE. In the event of RECEIVE_ACTIVE the CSMA flow enters the RECEIVE_IN_INPROGRESS state where it will wait until the reception is complete (RECEIVE_DONE) before entering the IFS_DELAY_STATE. In the event of NO_CARRIER_SENSE while in the CARRIER_ACTIVE state, the CSMA flow enters the IFS_DELAY_STATE. Upon entering the IFS_DELAY_STATE, a request to send will be deasserted if active. The IFS_DELAY_STATE will be exited upon the detection of the IFS_EXPIRED which will occur one IFS time after entering the IFS_DELAY-STATE and return the CSMA flow to the IDLE state.

Upon detection of TRANSMIT_PENDING in the IDLE state, the CSMA flow enters the RTS_PENDING state where a request to send is generated. In the RTS_PENDING state where a request to send is generated. In the RTS_PENDING state, the CSMA flow responds to CARRIER_SENSE by transitioning to the CARRIER_ACTIVE state outlined above. The CSMA flow responds to the CLEAR_TO_SEND by transitioning to the TRANSMIT state. The CSMA flow remains in the TRANSMIT state until TRANSMIT_DONE occurs causing the CSMA flow to transition to the IFS_DELAY-STATE outlined above.

Referring to the COLLISION AVOIDANCE FLOW DIAGRAM, Figure 4, and beginning in the CARRIER_ACTIVE state, the collision avoidance flow will remain in this state until CARRIER_INACTIVE is detected. Once CARRIER_INACTIVE is detected, the collision avoidance flow will transition to the CHANNEL_READY_DELAY state where it will remain until CARRIER_SENSE is detected, REQUEST_TO_SEND is detected or CHANNEL_READY is detected. CHANNEL_READY will occur in a time at least equal to the IFS time of the network after entering the CHANNEL_READY_DELAY state providing CARRIER_SENSE is not detected in that interval.

In the event that CARRIER_SENSE is detected, the collision avoidance flow will return to the CARRIER_ACTIVE_STATE outlined above.

In the event that CHANNEL_READY is detected while in the CHANNEL_READY_DELAY state, the collision avoidance flow will transition to the FAST_PAST_ENABLED state. From the FAST_PATH_ENABLED state, the collision avoidance flow will return to the CARRIER_ACTIVE state if CARRIER_SENSE is detected. If a REQUEST_TO_SEND is received while in the FAST_PATH_ENABLED state, the collision avoidance flow will transition to the TRANSMIT state where it will remain until NO_REQUEST_TO_SEND is detected causing a transition to the carrier active state.

In the event that REQUEST_TO_SEND is detected while in the transition into the COLLISION_AVOIDANCE_COUNTDOWN state where it will remain until CARRIER_SENSE is detected or COUNTER_ZERO occurs. While in this state, a counter preloaded with a random number decrements towards zero which when reached will internally generate the COUNTER_ZERO exit condition. When CARRIER_SENSE is detected in this state, the internal counter ceases decrementing and the collision avoidance flow transitions to the CARRIER_ACTIVE state. When COUNTER_ZERO is detected in this state, the collision avoidance flow transitions to the TRANSMIT state outlined previously.

The invention operation will now be described under specified conditions.

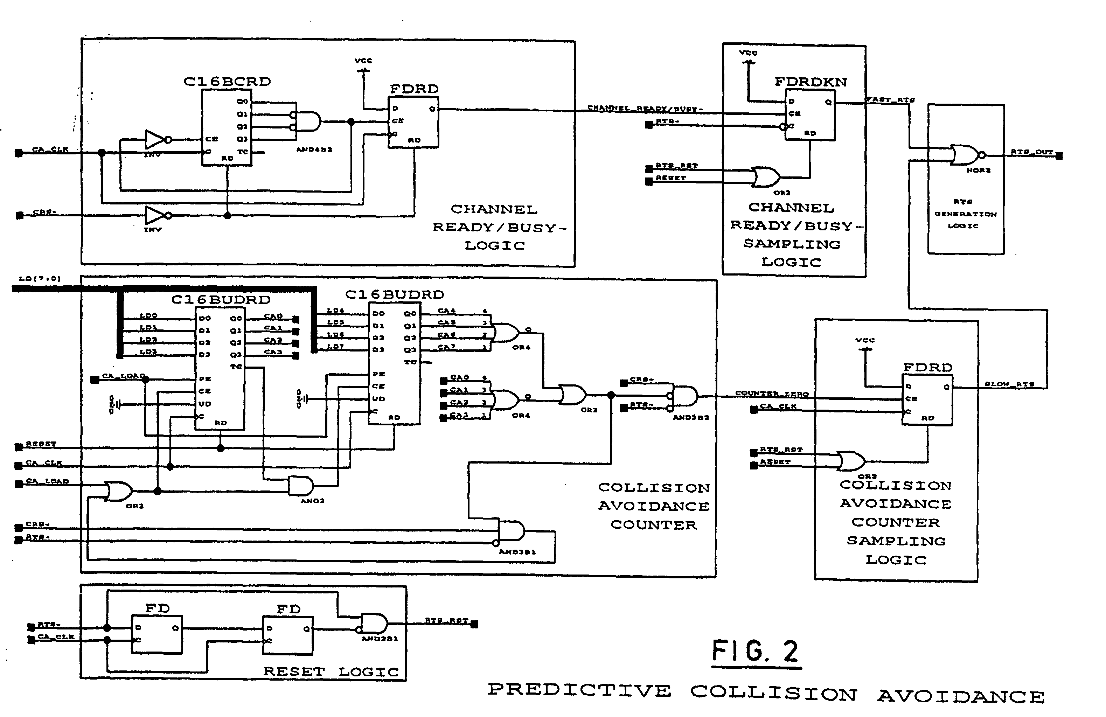

When the channel is busy, the Carrier Sense (CRS-) signal is low, the channel ready/busy-output of channel ready/busy-logic 1 is held in the reset (0 or busy) state. When the channel activity terminates, the carrier sense (CRS-) becomes inactive allowing a counter in the channel ready/busy- logic to begin counting. This counter is clocked by the CA_CLOCK and will force the channel ready/busy- signal to a 1 after a delay of at least 1 IFS time (interframe spacing). In the case of the circuit of figure 2 a 62 kilohertz clock is being used and a full clock cycle approximately 16 microseconds is used to provide a minimum window of time in addition to the interframe spacing (IFS) time.

When the CSMA controller of the station has a packet of information to be transmitted, will activate its Request to Send (RTS-) signal if the time since the last channel activity is greater than the interframe spacing (IFS) time. The collision avoidance circuitry of the embodiment of the invention depicted in figures 1 and 2 uses the high to low transition of the RTS- signal from the CSMA controller to sample the state of the channel ready/busy- signal at the output of the channel ready busy logic 1. The channel status sampling logic 2 performs this function.

If the channel ready/busy- signal is in the ready (1 or high) state when the RTS- signal is asserted, the collision avoidance hardware will not delay transmission. The output of the channel status sampling logic 2 (FAST_RTS) will be set to 1 immediately passing the incoming RTS-signal to the optical modem of the station allowing transmission to proceed.

If the channel ready/busy- signal is in the busy (0) state when the RTS- is asserted then the channel status sampling logic 2 will remain in the reset (0) state and prevent the incoming RTS- signal from immediately activating the transceiver. In order for transmission to occur the collision avoidance portion of the collision avoidance circuitry of this invention will control activation of the transmitter. This portion of the circuitry includes the collision avoidance counter 3 and counter zero sampling logic 4 providing the second input (SLOW_RTS) to the RTS generation logic which generates the transceiver activation signal (RTS_OUT-).

When the transmission controller of this invention is implemented as a module distinct from the host or local computer it serves, the host performs the following tasks:
Immediately prior to the host computer issuing a transmit command to the CSMA controller it loads a random number (8 bit in this embodiment), into the collision avoidance counter 3. The collision avoidance counter 3 in the present embodiment is an 8 bit binary down/counter with parallel load capability. When carrier sense (CRS-) is inactive, indicating that the channel medium is not in use and a request to send is pending (RTS- is low), the collision avoidance counter will decrement from its current value on the low to high transitions of the CA_CLOCK. In the case of the embodiment of figure 2 the CA_CLOCK is approximately 62 kilohertz. If at any point during the counting, the channel becomes active again (CRS- goes low) or the pending request is removed due to the host aborting its transmission for independent reasons, the counter will terminate decrementing and remain at the value achieved until carrier sense again becomes inactive and a request to transmit is again pending.

The output of the collision avoidance counter (COUNTER_ZERO) is sampled by the CA_CLOCK in the Counter Zero Sampling Logic. When the counter zero sampling logic samples the COUNTER_ZERO signal as 1 (requiring that the random number initially generated by the host computer has been decremented to 0, the RTS- signal is active (0) and carrier sense (CRS-) is inactive) the output of the counter zero sampling logic (SLOW_RTS) is set to 1 forcing output of the RTS_OUT- signal active (0) the RTS generation logic which enables the transmitter to transmit.

Upon the termination of a request to send (RTS-) a short pulse is generated by reset logic 5 to reset the channel status sampling logic and the collision avoidance counter 0 sampling logic to a reset of 0 state. This will deassert the RTS_OUT- signal to the transmitter and hence terminate the transmission.

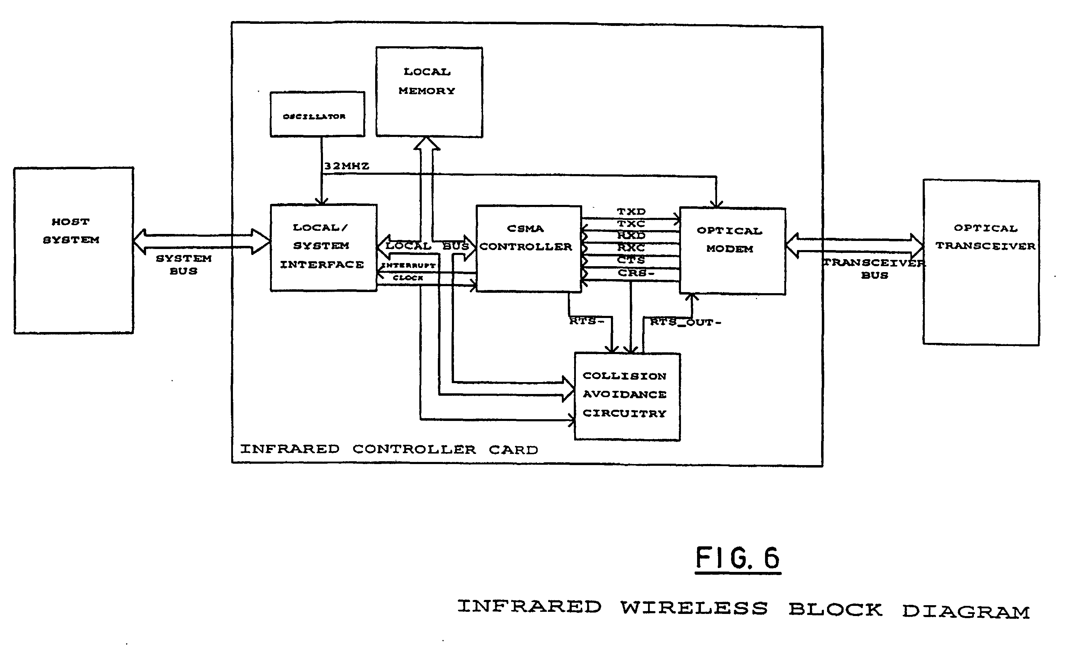

The instant invention is advantageously employed in wireless local area networks. An embodiment of this invention will be discussed in relation to an infrared wireless LAN. Figure 6 depicts a block diagram of an infrared communication system using an embodiment of this invention. It can be seen in this embodiment that the system comprises the following; a host system which is connected to an infrared controller card by means of a system bus, an infrared controller card and an optical transceiver which is connected to an infrared controller card by means of a transceiver bus. Also with reference to figure 6, it can be seen that the infrared controller card is comprised of a local/system interface, an oscillator, local memory, a CSMA controller, collision avoidance circuitry and an optical modem.

General station operation can be summarized as follows for data transmission. The host system transfers the data to be transmitted across the system bus, through the local/system interface onto the local bus and into the local memory and then issues a transmit command to the CSMA controller. The CSMA controller activates a request to send (RTS-) to the collision avoidance circuitry which will produce a request: to send out (RTS_OUT-) to the optical modem. The optical modem then generates a carrier sense signal (CRS-) to the CSMA controller and the collision avoidance circuitry, a clear to send (CTS) signal to the CSMA controller and a transmit clock (TXC) signal also to the CSMA controller. The CSMA controller now fetches the data to be transmitted from the local memory across the local bus and begins transmitting it to the optical modem on the transmit data (TXD) signal. The optical modem encodes the incoming transmit data and retransmits it across the transceiver bus to the optical transceiver where it is transmitted using LEDs as infrared radiation.

General station operation can be summarized as follows for data reception. Infrared energy is detected by the optical transceiver by means of PIN diodes. The optical transceiver transmits the raw receive data across the transceiver bus to the optical modem. The optical modem decodes the raw receive data and transmits clean receive data to the CSMA controller across the receive data (RXD) signal, it also generates a receive clock (RXC) signal and a carrier sense (CRS-) signal to the CSMA controller. The CSMA controller stores the data being received in the local memory across the local bus and when the reception is complete notifies the local/system interface of the reception by generating an interrupt. The local/system interface notifies the host system of the reception across the system bus. The host system then retrieves the data received from the local memory across the local bus through the local/system interface onto the system bus.

Referring to the system the host system is the system in which data resides or is intended to be received to or from other hosts or data processing systems located remotely using infrared transmission of this embodiment for the purposes of communication. The host system typically is a computer where programs are executed and which manages the data being transferred across the communication medium employed, in this case infrared light through air. For example, the programming at the host may be performing the operation of copying a file from one personal computer to another personal computer across the infrared LAN. This is a high level operation whose effective operation is dependent upon the medium used being capable of correctly transferring data from one personal computer to another. Data is transferred to and from the host system in parallel across the system bus from and to the infrared wireless controller card.

The infrared wireless controller card often called the base card is a unit which contains all the logical intelligence of the infrared wireless hardware in this embodiment. This card handles the host interface, manages the local data bus for transmit and receive operations, and performs the collision avoidance functions.

The optical transceiver is a physical unit capable of generating a stream of light pulses used to encode transmitted data. The light pulses are typically generated by LEDs which are switched on and off in accordance with the data being transmitted. The optical modem, located on the basecard, provides pulse position modulation of the data in which the position of a pulse of light in a sequence of possible pulse positions corresponds to the value of data input to the modem. For every 4 bits of data input to the modem from the CSMA Controller the optical modem will generate a sequence of 16 pulse intervals to the optical transceiver of which one will be occupied by a logic high pulse and will result in a corresponding pulse of infrared light being emitted from the optical transceiver which codes for the data input to the modem. Conversely the modem can be used to decode incoming infrared transmissions encoded in like manner to generate the electrical signals necessary to convey information to the CSMA controller in the receiver.

Advantageously the function of the CSMA controller may be implemented by using an INTEL 82593 core lan controller. Details on this controller are available in the 82593 CSMA/CD Core Lan Controller User Manual, Intel Document Number 297125-001. This controller is designed to support IEEE 802.3 protocol such as Ethernet, Cheapernet, and Twisted Pair Ethernet. The 82593 can be used in the infrared wireless controller card to act as the interface between the optical modem which handles the infrared modulation in a serial manner and the host computer which is typically a parallel system. Those skilled in the art will recognize that the required function of the 82593 could be achieved by other serial communication controllers.

### Detailed Overview of Transmission

The host system assembles the data that it desires to transmit into a packet. The packet is downloaded into the local memory of the infrared wireless controller card. The host then loads the collision avoidance counter with a random number selected from 0 to 255 and then issues a transmit command to the CSMA controller. The CSMA controller will then retrieve data to be transmitted across the local data bus by means of local DMA (direct memory access) under control of the local/system interface which is a parallel interface.

The CSMA controller executing the transmit command issued by the host generates a request to send (RTS-) signal in accordance with the CSMA protocol with which the controller operates to request transmission on the infrared medium.

The carrier sense signal (CRS-) is an active low signal that is asserted by the optical modem during transmission or reception of data to or from the optical transceiver. The CSMA controller monitors the carrier sense signal (CRS-) and will not activate its request to send (RTS-) output until CRS- has been observed inactive for at least the IFS time (the interframe spacing time).

When a transmission is pending, the CSMA controller will assert its RTS- signal as soon as CRS- signal has been inactive at least the IFS time.

The terminal or station seeking to transmit a message to another station has its message transmission governed by a communication controller. When communication or transmission is desired a random number is loaded (for instance either by the host or by the communication controller) into a collision avoidance counter to bring that counter to the state corresponding to the random number. In the case of a particular embodiment of the invention a random number is selected between 0 and 255. Transmission in the communications channel will commence immediately if the channel has been inactive for a time period that is equal to a greater than the interframe spacing time used by the protocol of the communication network. If, however, the channel or communication medium is not free then apparatus in the communication controller will wait for the channel to become free and then delay the attempt to transmit by a random internal using the collision avoidance counter. The collision avoidance counter is decremented from its original random number value towards 0. When the counter reaches 0 the communication controller will enable transmission on the medium. If use of the medium is detected before the counter reaches 0 the decrementing of the counter will halt at the current value and further decrementing will await detection that the channel has become inactive for a period of time in the case of the preferred embodiment a length of time at least equal to the interframe spacing time whereupon counting will be resumed.

In response to the assertion of the RTS- signalling the collision avoidance circuitry will generate a request to send out (RTS_OUT) signal to the optical modem;
(a) immediately if the CRS- signal has been inactive for a period of time slightly longer than the IFS time;
(b) after the collision avoidance counter loaded by the host has decremented to 0. This counter value decrements when RTS- is active and channel is not in use (CRS- is high).

Once the optical modem receives the request-to-send-out signal (RTS_OUT-) from the collision avoidance circuit it will begin transmitting a synchronization sequence to allow other stations, receiver units, to detect the incoming signal and adjust their receivers gain adequately to resolve the incoming data. Those skilled in the art will recognize this as automatic gain control (AGC).

At the end of the synchronization sequence the optical modem asserts a clear to send signal (CTS) back to the CSMA controller. When the CSMA controller receives the CTS signal it will begin shifting transmission data out the TXD pin, on each falling edge of the TXC input signal generated by the optical modem. The TXC signal is a free running 1 megahertz signal in this embodiment (for this illustration a 1 Mbs network data rate has been assumed).

The transmission will continue in this stage until the CSMA controller has sent the last bit of the current packet. At this point the CSMA controller deasserts its RTS- signal. The deassertion of the RTS- signal is detected by the Reset Logic which will in turn remove the request to send out signal (RTS_OUT) to the optical modem and hence will terminate the transmission.

### Detailed Overview of Reception

The optical transceiver contains an analog receiver circuit that detects and amplifies incoming infrared data, and passes it across the transceiver bus to the optical modem located on the infrared wireless controller card in this embodiment. The optical modem decodes the incoming serial data stream from the optical transceiver and produces, as output, the demodulated receive data on the RXD signal as well as a negative going receive clock transition on the RXC signal. This transition occurs in the middle of every bit interval on the RXD pin.

The CSMA controller serially shifts the data on its RXD input pin into its serial subsystem (which is internal) on each falling edge of the RXC input. The CSMA controller stores the incoming data in the local memory using the local data bus by means of the DMA mentioned previously, again under control of the local/system interface. The local data bus is a parallel interface.

Referring to figure 2 which contains a specific embodiment of the invention the channel ready/busy- logic circuitry includes a 4 bit up counter C16BCR which is reset to 0 when carrier sense is active and counts up at 62 kilohertz when CRS- is inactive to a maximum of 6. Circuit C16BCRD and the 4 input and gate (AND 482) together implement an IFS delay circuit. They are followed by an FDRD which imposes an additional delay of 1 clock cycle. The output of that flip flop is the channel ready/busy- signal which feeds the enable input of the channel status sampling logic flip flop FDRD. The D input of this flip flop is tied to VCC. The channel ready/busy- output signal is tied to clock enable, and the clock signal at input C is provided by the RTS- signal generated by the CSMA controller. The channel status sampling logic flip flop is reset in the event of a system reset (RESET) and by the output of the reset logic (RTS_RST) which will occur at the end of a transmission request. The output of the channel status sampling logic flip flop is an input to the RTS generation logic which generates the external request to transmit (RTS_OUT-).

The RTS generation logic 6 consists of a 2 input NOR gate which will generate an active low level on its output (RTS_OUT-) when either of its inputs (FAST_RTS, SLOW_RTS) are in their active state (high or 1).

In the current embodiment the collision avoidance counter is composed of an 8bit binary down counter with parallel load capabilities. The host can load a random number into the counter over the parallel local bus. In order to decrement, a request must be pending on the RTS-signal, carrier sense (CRS-) signal must be high indicating that the channel is inactive and the counter value must be non-zero.

The signal CA Load is generated by the system/local interface and reaches the CA circuit across the local bus. When CA load is asserted (goes high), the parallel enable function of the Collision Avoidance Counter is enabled, which stores the random number from the host at the termination of the host's write cycle.

The counter 0 sampling logic is comprised of a flip flop FDRD which is set to 1 when the counter_zero signal is active at the rising edge of the CA_CLOCK. This implies the collision avoidance counter has decremented to 0, a request is pending (RTS- is low) and CRS- is high indicating that the channel is free. The output of the counter zero sampling logic, SLOW_RTS, provides the second input to the RTS generation logic and when high enables transmission by asserting the RTS_OUT- signal to the optical modem.

The output of the counter zero sampling logic and the channel status sampling logic are reset to 0 by means of the reset logic depicted.

The reset logic comprises two serially cascaded flip flops which generate a pulse on the RTS_RST signal following the rising edge of the RTS- signal.

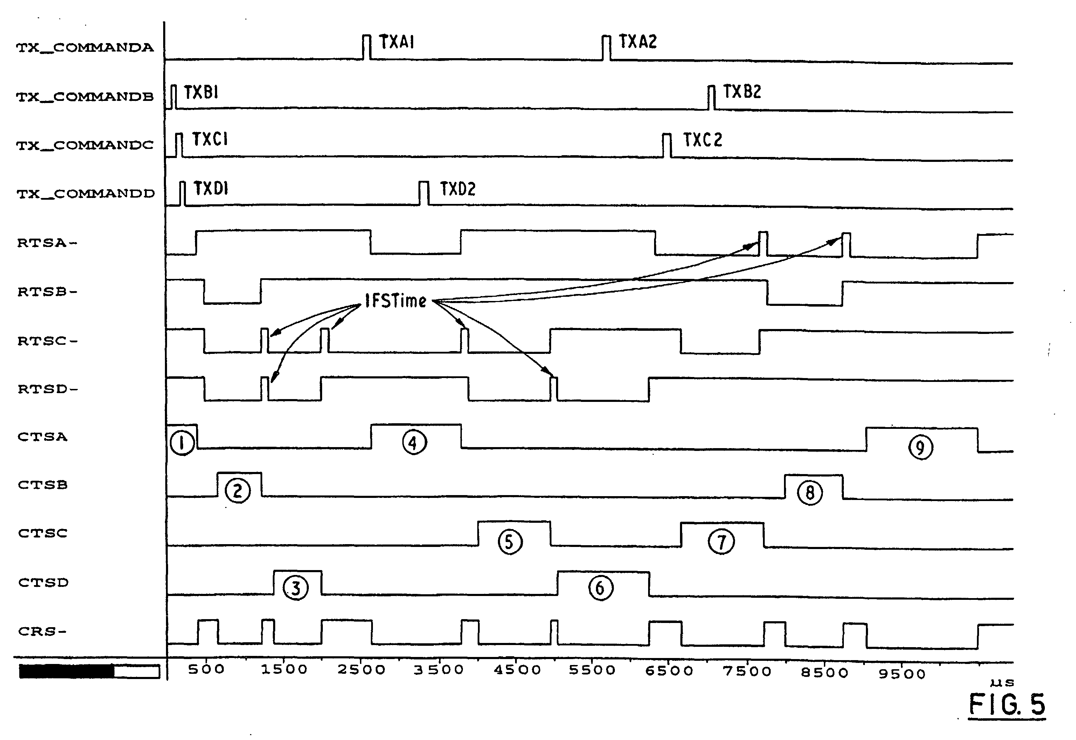

Although it is believed that a person skilled in the art will appreciate the operation and advantages of the invention, reference to figure 5 which discloses wave forms of simulated network activity may be of further assistance in understanding the invention.
Nine packet transmissions are simulated with various conditions outlined below. In figure 5 there are 13 signals represented;
four request to send (RTSA-, RTSB-, RTSC-, RTSD-,) signals within the infrared controller cards of stations A, B, C, and D, respectively;
four clear to send (CTSA, CTSB, CTSC, CTSD,) signals within the infrared controller cards of stations A, B, C, and D, respectively;
four simulated transmit commands (TX-command A, TX-command B, TX-command C, TX-command D,) from host computers are sent to the CSMA controllers of stations A, B, C, and D respectively;
one carrier sense signal (CRS-); this signal is common to all stations within range of each other in the network because they all sense the same channel activity.

Still referring to figure 5 reference is made to each of the nine indicated packets in the diagram. Packets are indicated by a high level on any of the CTS A, B, C or D signals.

Referring to the CTSA wave form, frame 1 is being transmitted by station A. During this transmission the stations B, C, and D have all received transmit commands as indicated by TXB1, TXC1 and TXD1. Immediately before the transmit commands were issued by the host system to the infrared controller cards, the hosts selected random numbers and stored then in the collision avoidance counters of the independent infrared controller cards. This happens when each system/local interface produces a CA_LOAD signal which loads the data value on the local bus LD<7:0> into the collision avoidance counter. For this simulation it will be assumed that the random number received by the collision avoidance counter of B was the lowest number, D has the next lowest number and C had a number that was significantly higher than either of B or D.

At the end of frame 1 an IFS time period is allowed to pass and then all three stations B, C, and D, activate their requests to send (RTSB-, RTSC-, RTSD-,) signals.

Referring to the CTSB wave form, frame 2 is being sent by station B after having won the communications channel in the collision arbitration following frame 1. Notice that at the end of packet 2, stations C and D both remove their RTS- signals for an IFS time period afterwhich they reassert the signals. This behavior of the CSMA controller is the current implementation of collision avoidance ensures a high to low transition of the RTS- signal from every station with pending requests one IFS time after detection of the termination of activity on the channel.

Referring to the CTSD wave form, frame 3 is being sent by station D. It was next in line behind unit B for the use of the channel. Note that unit C has still not be granted use of the channel. Station C will again deasert its RTS signal for one IFS time period following the termination of packet 3 and then reassert its signal RTSC-.

Referring to wave form CTSA in reference to packet 4 it will be noted that packet 4 is sent before station C has been able to send its packet. When station A receives its transmit command TXA1 the channel is observed to be inactive. Station C is currently in a collision avoidance delay state due to the large random number assigned to its collision avoidance counter by its host prior to transmit command (TXC1). Therefor when station A activates its request to send (RTSA-) it is granted the channel immediately and station C is again held off, forced to deassert RTSC- after termination of packet 4 and wait another IFS time period after the channel is clear before reasserting its RTSC- signal. Also note that during the sending of packet 4 a new transmit command TXD2 for station D is issued by its host. Once again prior to the issuing of that transmit command, the host has loaded a random number in the collision avoidance counter of station D. For the purpose of this simulation it should be noted that the random number assigned to the collision avoidance counter of station D is only slightly greater than the contents of collision avoidance counter of station C which has been decremented somewhat during its long waiting period from its initial high value. If the random number assigned to the collision avoidance counter of station D had been lower than what was left over in the collision avoidance counter of station C, station C would have been held off again from using the communication channel.

Referring to wave form CTSC it can now be noted that station C is finally able to send packet 5.

Referring to wave form CTSD it can be seen that station D begins sending its packet 6 very soon after packet 5 ended. Because of the closeness of the random number that was assigned to station D for its transmission request TXD2 during the next arbitration cycle station D was promptly allocated the channel indicating that its priority had approached the highest level so that it could send packet 6. Just for the purpose of clarity it should be recalled that the collision avoidance counters in each of the stations decrement they do not reset upon the initiation of channel activity. Instead, counters that are interrupted by channel activity merely stop at the current value and will continue counting after the an IFS time period has elapsed following the termination of channel activity. It will be noted that during the transmission of packet 6 the host of station A has sent a transmit command to its controller TXA2 and a new accompanying random number for the collision avoidance counter so that station A will join the queue for transmission on the communication medium.

Referring again to wave form CTSC in reference to packet 7 this time it will be noted that station C has achieved immediate access to the channel and station A has been held off.

Referring to the wave CTSB in reference to the transmission of packet 8 resulting from the transmitted instructing from its host TXB2 and the corresponding random from its host during the transmission of packet 7 it will be noticed that station B succeeded in gaining use of the communications medium forcing station A to wait. This implies that the random number provided by the host prior to TXB2 was lower than the value in collision avoidance counter of station A at that time.

Referring to wave form CTSA again, this time in relation to packet 9, it can be seen that station A has finally completed its acquisition of the communication channel for transmission. The host of station A had issued the transmit command (TXA2) during the time that packet 6 was being transmitted by station D.

The forgoing has described the preferred embodiments and modes of operation of the instant invention. These are merely illustrative of the present invention. It should be appreciated that variations may be made in the embodiments by persons skilled in the art. For instance, with suitable speed processing available at each-station the present invention could be implemented by software.

## Claims

1. A method of reducing collision of message packets sent by a station in a wireless communication network used by a least two stations for communication over a medium, the method **characterised in** comprising:
permitting access to the medium by each station requiring use of the medium immediately if the medium has been inactive longer than one predetermined delay amount of time;
and imposing a length of delay in permitting access to the medium by each of the stations if the medium is in use.

2. A method as claimed in claim 1 wherein the length of delay imposed on the stations is established by imposing random periods of waiting for the stations wherein the random periods are comprised of multiples of a selected unit of time which is greater than the carrier sense time of the medium between stations; and
wherein the carrier sense time of the medium is the time period required for a signal sent by one station to reach and be detected by another station.

3. A method as claimed in claim 1 wherein the random periods of waiting are determined at the respective stations independently of each other.

4. A method as claimed in claim 2 wherein each the random period of waiting is selected by a host associated with each station.

5. A method as claimed in claim 2 wherein each the random period of waiting is selected by the station in response to a transmit command from its associated host.

6. A method as claimed in claim 2 wherein the random waiting initially imposed at each station is stepped units of time towards a preselected value whereupon transmission will be enabled at the first station reaching the predetermined value.

7. A method as claimed in claim 5 wherein the stepping is halted during times of channel activity.

8. A method as claimed in claim 5 wherein stations newly requiring access to the communication medium select random periods of waiting for use in accessing the communications medium.

9. A method as claimed in claim 1 or 5 wherein the predetermined delay amount of time is at least equal to the communications network interface spacing time period.

10. Apparatus for controlling communication in a wireless communication station to reduce the chance of collision of message packets sent by the station with messages sent by other stations using a common communication medium, the apparatus comprising: control means responsive to a request to transmit at the station, the control means at the station **characterised in** comprising:
means for immediately transmitting a message on the medium if the medium has been inactive for longer than a predetermined delay amount of time, and
means for imposing a delay in transmission of messages if the medium is in use.

11. Apparatus as claimed in claim 10 wherein the means for imposing a delay includes means for imposing a random period of waiting.

12. Apparatus as claimed in claim 11 wherein the random period is comprised of a multiple of a selected unit of time which is greater than the time for a signal sent by one station to reach and be detected by another.

13. Apparatus as claimed in claim 12 comprising:
means for detecting medium use;
means responsive to the detection of medium activity; and
logic means enabling transmission on the medium if no activity is detected within a predetermined length of time; and
means responsive to medium activity to delay transmission, wherein the means for delay includes collision avoidance counter means adapted for storage of a random number;
the counter means being enabled in response to the medium detecting means detecting termination of medium activity to step toward a predetermined value whereupon transmission will be enabled.

14. Apparatus as claimed in claim 14 wherein the counter is stopped when the medium detecting means detects channel activity as the counter is stepping and is reenabled to resume counting from the count previously reached when medium activity ceases.

15. Apparatus as claimed in claim 14 comprising latch means to latch the controller in transmission enable mode until transmission of a desired message is complete.

16. Apparatus as claimed in claim 15 comprising reset means responsive to discontinuance of a request to transmit for resetting the latch means to disabled transmission.

17. Apparatus as claimed in claim 15 wherein the means for transmitting messages without delay comprises a timer responsive detection of medium activity comprised of a counter which begins counting when no medium activity is detected to a value indicating expiry of the predetermined delay time for the purpose of enabling transmission.

## Patentansprüche

1. Verfahren zum Vermindern der Kollision von Nachrichtenpaketen, die von einer Station in einem drahtlosen Kommunikationsnetz gesendet werden, das von mindestens zwei Stationen für die über ein Medium erfolgende Datenübertragung genutzt wird, wobei das Verfahren **dadurch gekennzeichnet ist, dass** es Folgendes umfasst:
das Ermöglichen des sofortigen Zugriffs auf das Medium durch jede der Stationen, die das Medium nutzen muss, wenn das Medium länger als eine vordefinierte Verzögerungszeitspanne inaktiv war;
das Festlegen einer Verzögerungszeitspanne, während der jeder der Stationen der Zugriff auf das Medium ermöglicht wird, wenn das Medium genutzt wird.

2. Verfahren nach Anspruch 1, wobei die für die Stationen festgelegte Verzögerungszeitspanne durch willkürlich für die Stationen festgelegte Wartephasen definiert wird,
wobei die willkürlich festgelegten Wartephasen dem Vielfachen einer ausgewählten Zeitspanne entsprechen, die länger als die Zeitspanne für die Trägerprüfung im Medium zwischen den Stationen ist; und
wobei die Zeitspanne für die Trägerprüfung im Medium der Zeitspanne entspricht, in der ein von einer Station gesendetes Signal eine andere Station erreicht und von dieser erkannt wird.

3. Verfahren nach Anspruch 1, wobei die willkürlich festgelegten Wartephasen unabhängig voneinander an den entsprechenden Stationen definiert werden.

4. Verfahren nach Anspruch 2, wobei jede willkürlich festgelegte Wartephase von einem Host ausgewählt wird, der mit jeder Station verbunden ist.

5. Verfahren nach Anspruch 2, wobei jede willkürlich festgelegte Wartephase von der Station als Reaktion auf einen Übertragungsbefehl ausgewählt wird, der von dem mit der Station verbundenen Host ausgegeben wird.

6. Verfahren nach Anspruch 2, wobei die ursprünglich an jeder Station willkürlich festgelegte Wartephase schrittweise um Zeiteinheiten auf einen vorausgewählten Wert hingeführt wird, bei dem die Übertragung an der Station ausgelöst wird, die den vordefinierten Wert zuerst erreicht.

7. Verfahren nach Anspruch 5, wobei die schrittweise Hinführung der Phase während der Kanalaktivität gestoppt wird.

8. Verfahren nach Anspruch 5, wobei Stationen, die erneut Zugriff auf das Datenübertragungsmedium haben müssen, willkürlich festgelegte Wartephasen für den Zugriff auf das Datenübertragungsmedium auswählen.

9. Verfahren nach Anspruch 1 oder 5, wobei die vordefinierte Verzögerungszeitspanne mindestens der Zeitspanne zwischen Datenübertragungsblöcken im Kommunikationsnetz entspricht.

10. Vorrichtung zum Steuern der Datenübertragung in einer drahtlosen Kommunikationsstation, um die Wahrscheinlichkeit zu verringern, dass es zwischen den von der Station und den von anderen Stationen über ein gemeinsames Datenübertragungsmedium gesendeten Nachrichtenpaketen zu einer Kollision kommt, wobei die Vorrichtung Folgendes umfasst:
ein Steuerungsmittel an der Station, das auf eine Übertragungsanfrage reagieren, wobei das Steuerungsmittel an der Station **dadurch gekennzeichnet ist, dass** es Folgendes umfasst:
ein Mittel zum sofortigen Übertragen einer Nachricht über das Medium, wenn dieses länger als eine vordefinierte Verzögerungszeitspanne inaktiv war; und
ein Mittel zum Festlegen einer Verzögerung bei der Übertragung von Nachrichten, wenn das Medium genutzt wird.

11. Vorrichtung nach Anspruch 10, wobei das Mittel zum Festlegen einer Verzögerung Mittel für das willkürliche Festlegen einer Wartephase enthält.

12. Vorrichtung nach Anspruch 11, wobei die willkürlich festgelegte Wartephase einem Vielfachen einer ausgewählten Zeitspanne entspricht, die länger als die Zeitspanne ist, in der ein von einer Station gesendetes Signal eine andere Station erreicht und von dieser erkannt wird.

13. Vorrichtung nach Anspruch 12, die Folgendes umfasst:
ein Mittel zum Erkennen der Mediumnutzung;
ein auf die Erkennung der Mediumaktivität reagierendes Mittel; und
ein logisches Mittel, das eine Datenübertragung über das Medium ermöglicht, wenn innerhalb einer vordefinierten Zeitspanne keine Aktivität erkannt wird; und
auf die Mediumaktivität reagierendes Mittel zum Verzögern der Übertragung, wobei das Verzögerungsmittel ein Kollisionsvermeidungszählermittel zum Speichern eines Zufallswerts enthält;
wobei das Zählermittel als Reaktion auf die von dem Mittel zum Erkennen der Mediumnutzung erkannte Beendigung der Mediumaktivität aktiviert wird, um schrittweise bis zu einem vordefinierten Wert weiterzuzählen, bei dem die Übertragung ausgelöst wird.

14. Vorrichtung nach Anspruch 13, wobei der Zähler gestoppt wird, wenn das Mittel zum Erkennen der Mediumnutzung beim schrittweisen Fortschalten des Zählers eine Kanalaktivität erkennt, und wobei der Zähler bei Einstellung der Mediumaktivität erneut aktiviert wird, um den Zählvorgang bei dem zuvor erreichten Wert wieder aufzunehmen.

15. Vorrichtung nach Anspruch 14, die ein Haltemittel umfasst, um den Controller im Übertragungsmodus zu halten, bis die Übertragung einer gewünschten Nachricht abgeschlossen ist.

16. Vorrichtung nach Anspruch 15, die ein auf den Abbruch einer Übertragungsanforderung reagierendes Zurücksetzungsmittel umfasst, um das Haltemittel auf die deaktivierte Übertragung zurückzusetzen.

17. Vorrichtung nach Anspruch 15, wobei das Mittel zur verzögerungslosen Nachrichtenübertragung einen Zeitgeber umfasst, der auf eine Mediumaktivität reagiert und aus einem Zähler besteht, der beim Erkennen fehlender Mediumaktivität mit dem Zählen bis zu einem Wert beginnt, der zwecks Aktivierung der Übertragung den Ablauf der vorgegebenen Verzögerungszeit anzeigt.

## Revendications

1. Un procédé de réduction des collisions de paquets de messages envoyés par une station dans un réseau de communication sans fil, utilisé par au moins deux stations pour communiquer sur un support, le procédé étant **caractérisé par** le fait de comprendre :
l'autorisation d'accès au support par chaque station, demandant utilisation du support immédiatement si le support est resté inactif plus longtemps qu'une longueur de délai prédéterminée ;
et imposer un délai pour autoriser l'accès au support par chacune des stations, si le support est en utilisation.

2. Un procédé selon la revendication 1, dans lequel la longueur de délai imposée aux stations est établie en imposant des périodes aléatoires d'attente aux stations, dans lequel les périodes aléatoires sont formées d'une pluralité d'unités de temps sélectionnées, supérieures au temps de détection de la porteuse du support entre les stations ; et
dans lequel le temps de détection de la porteuse du support est la période de temps nécessaire pour qu'un signal, envoyé par une station, atteigne et soit détecté par une autre station.

3. Un procédé selon la revendication 1, dans lequel les périodes aléatoires d'attente sont déterminées aux stations respectives, indépendamment de chaque autre.

4. Un procédé selon la revendication 2, dans lequel la période aléatoire d'attente est sélectionnée par un hôte, associé à chaque station.

5. Un procédé selon la revendication 2, dans lequel chaque période aléatoire d'attente est sélectionnée par la station, en réponse à une instruction de transmission émanant de son hôte associé.

6. Un procédé selon la revendication 2, dans lequel l'attente aléatoire, initialement imposée à chaque station, est formée d'unités de temps accumulées, vers l'atteinte d'une valeur présélectionnée, à la suite de quoi la transmission va être activée à la première station atteignant la valeur prédéterminée.

7. Un procédé selon la revendication 5, dans lequel l'accumulation est stoppée pendant les périodes de temps d'activité de canal.

8. Un procédé selon la revendication 5, dans lequel les stations demandant nouvellement un accès au support de communication sélectionnent des périodes aléatoires d'attente pour utilisation dans l'accès au support de communication.

9. Un procédé selon la revendication 1 ou 5, dans lequel la période de temps prédéterminée est au moins égale à la période de temps d'espacement d'interface du réseau de communication.

10. Dispositif pour commander la communication dans une station de communication sans fil, afin de réduire le risque de collision entre des paquets de messages, envoyés par la station, avec des messages envoyés par d'autres stations, par utilisation d'un support de communication commun, le dispositif comprenant :
des moyens de commande, réagissant à une requête de transmission à la station, les moyens de commande à la station étant **caractérisés par** le fait de comprendre :
des moyens pour transmettre immédiatement un message sur le support, si le support est resté inactif pendant une durée supérieure à une quantité de temps prédéterminée ; et
des moyens pour imposer un délai à la transmission de messages si le support est en utilisation.

11. Dispositif selon la revendication 10, dans lequel les moyens pour imposer un délai comprennent des moyens pour imposer une période aléatoire d'attente.

12. Dispositif selon la revendication 11, dans lequel la période aléatoire est formée d'une pluralité d'unités de temps sélectionnées, supérieures au temps que prend un signal, envoyé par une station, pour atteindre et être détecté par une autre.

13. Dispositif selon la revendication 12, comprenant :
des moyens pour détecter l'utilisation du support ;
des moyens réagissant à la détection de l'activité du support ; et
des moyens logiques, permettant une transmission sur le support si aucune activité n'est détectée dans les limites d'une période de temps prédéterminée ; et
des moyens réagissant à l'activité du support pour retarder la transmission, dans lesquels les moyens de retardement comprennent des moyens compteurs d'évitement de collision, adaptées pour le stockage d'un nombre aléatoire ;
les moyens compteurs étant activés en réponse au fait que les moyens de détection de support, détectant l'achèvement de l'activité du support, incrémentent vers une valeur prédéterminée, à laquelle la transmission va être activée.

14. Dispositif selon la revendication 13, dans lequel le compteur est stoppé, lorsque les moyens de détection de support détectent l'activité du canal alors que le compteur est en incrémentation, et est réactivé pour reprendre le comptage à partir du comptage antérieurement atteint, lorsque l'activité du support cesse.

15. Dispositif selon la revendication 14, comprenant des moyens de verrouillage pour verrouiller le contrôleur en mode d'activation de transmission jusqu'à ce que la transmission d'un message souhaité soit achevée.

16. Dispositif selon la revendication 15, comprenant des moyens de remise à l'état initial, réagissant à la suppression d'une requête de transmission, pour remettre à l'état initial les moyens de verrou afin de désactiver la transmission.

17. Dispositif selon la revendication 15, dans lequel les moyens de transmission de messages sans délai comprennent un minuteur réagissant à la détection de l'activité du support, formé d'un compteur, qui commence à compter lorsqu'aucune activité de support n'est détectée, jusqu'à atteindre une valeur indiquant l'expiration du délai prédéterminé, dans le but d'activer la transmission.
